# EUROPÄISCHE PATENTSCHRIFT

(11) **EP 3 280 301 B1**
(45) Veröffentlichungstag und Bekanntmachung des Hinweises auf die Patenterteilung: **26.12.2018**
(21) Anmeldenummer: 16711815.7
(22) Anmeldetag: 22.03.2016
(51) Int. Cl.: A47J 31/36

(54) **BRÜHVORRICHTUNG MIT ZWEI BRÜHKAMMERN**
BREWING DEVICE HAVING TWO BREWING CHAMBERS
DISPOSITIF D'INFUSION À DEUX CHAMBRES À INFUSION

(30) Priorität: 08.04.2015 CH 4892015
(43) Veröffentlichungstag der Anmeldung: 14.02.2018
(73) Patentinhaber: Delica AG, 4127 Birsfelden (CH)
(72) Erfinder: AFFOLTER, Roland, 5103 Möriken (CH); BRÖNNIMANN, Markus, 3274 Hermrigen (CH); ZHAO, Miles, Shenzhen City PRC 518101 (CN)
(74) Vertreter: Hepp Wenger Ryffel AG
(86) Internationale Anmeldenummer: PCT/EP2016/056246
(87) Internationale Veröffentlichungsnummer: WO 2016/162204

(56) Entgegenhaltungen:
- EP-A2- 1 327 407
- US-A1- 2008 121 111
- US-A1- 2009 308 259

## Beschreibung

Die vorliegende Erfindung betrifft eine Brühvorrichtung für eine Getränkezubereitungsmaschine für Kapseln gemäss dem Oberbegriff von Anspruch 1 mit zwei Brühkammern, insbesondere zur Getränkezubereitung mittels Portionenkapseln.

Aus dem Stand der Technik ist bereits eine Vielzahl von Getränkezubereitungsmaschinen mit entsprechenden Brühvorrichtungen bekannt, welche ausgehend von einer Kapsel portionierte Getränkeeinheiten zur Verfügung stellen. Ausserdem sind bereits Maschinen bekannt, welche zur Zubereitung eines Mischgetränks, bzw. in Form eines Milchkaffees oder eines Cappuccinos, zwei unterschiedliche Kapseln aufnehmen können, welche gleichzeitig und/oder sequentiell verarbeitet werden.

Beispielsweise zeigt EP 1 327 407 B1 eine Vorrichtung zur Extraktion einer Getränkesubstanz, wobei eine Aufnahme für mehrere Kapseln zur Anwendung kommt. Entsprechend sind auch mehrere Brühkammern vorhanden, um ein entsprechendes Getränk ausgeben zu können.

Die EP 2 227 120 B1 offenbart eine Vorrichtung zur Zubereitung von verschiedenen Arten von Getränken. Diese Vorrichtung weist zwei Aufnahmen für Portionenkapseln auf, welche von der Maschine erkannt und entsprechend aufgebrüht werden können.

In der EP 1 961 351 B1 ist eine Brüheinheit und ein Getränkezubereitungsgerät offenbart, welche wenigstens eine erste und eine zweite Aufnahmekammer für entsprechende Kapseln aufweisen. Die beiden Kapseln werden sequentiell prozessiert, sodass beispielsweise geschichtete Getränke hergestellt werden können.

Die US 2009/0308259 A1 offenbart eine Brühvorrichtung mit zwei separaten Brühkammern. Die Brühkammern weisen eine Kapselaufnahme und ein Verschlusselement auf. Das Verschlusselement interagiert mit der Kapselaufnahme mittels eines Bajonettverschlusses. Entsprechend muss eine Ansteuerung der Bajonettelemente erfolgen, sodass die Verschlussmechanik bedient werden kann. Hierzu ist die Brühvorrichtung mit einem Hebelelement 50 versehen, welches um eine zwischen den beiden Brühkammern angeordnete Drehachse drehbar ist und einen Hebel zum Anlenken sowie zwei Nockenaufnahmen zur Interaktion mit den Bajonettelementen aufweist. Nachteilig im Stand der Technik ist, dass die Brühkammern zur Aufnahme der beiden Kapseln und die entsprechende Verschlusseinheit jeweils so miteinander gekoppelt sind, dass diese gleichzeitig geschlossen werden. Insbesondere bei einer Extraktion unter hohem Druck führt dies zu Dichtungsproblemen, da der Anpressdruck auf die Kapsel beim Verschliessen der Brühkammer nicht individuell angepasst werden kann.

Es ist Aufgabe der Erfindung, die Nachteile des Standes der Technik zu überwinden. Insbesondere soll eine Brühvorrichtung mit zwei separaten Brühkammern und eine entsprechende Getränkezubereitungsmaschine zur Verfügung gestellt werden, welche ein individuelles Verschiessen der Brühkammern erlauben.

Diese Aufgabe wird durch eine Brühvorrichtung mit den Merkmalen aus Anspruch 1 gelöst. Weitere Ausführungsformen ergeben sich aus den abhängigen Patentansprüchen.

Unter einer Getränkezubereitungsmaschine wird insbesondere eine Maschine verstanden, welche basierend auf Portionenkapseln jegliche Arten von flüssigen Nahrungsmitteln oder Genussmitteln herstellen kann. Dabei wird nicht unterschieden, ob es sich bei dem zubereiteten Nahrungsmittel um Kaffee, Tee, milchhaltige Produkte, Instantsuppen, Babynahrung oder Kraftgetränke handelt. Insbesondere handelt es sich dabei jedoch um eine Maschine, welche ein flüssiges Nahrungsmittel basierend auf einer Portionenkapsel, welche eine Nahrungsmittelsubstanz aufweist, durch Einspritzen einer Flüssigkeit in die Kapsel die Nahrungsmittelsubstanz auflöst, extrahiert, brüht, usw. Unter einer Kapsel wird insbesondere auch ein Pad verstanden.

Eine erfindungsgemässe Brühvorrichtung für eine Getränkezubereitungsmaschine für Kapseln mit zwei Brühkammern umfasst eine erste Kapselaufnahme und ein erstes Verschlusselement für die erste Brühkammer sowie eine zweite Kapselaufnahme und ein zweites Verschlusselement für die zweite Brühkammer. Ausserdem weist die Brühvorrichtung ein Getriebe für die Betätigung der beiden Verschlusselemente auf. Erfindungsgemäss umfasst das Getriebe ein gemeinsames Antriebsglied, ein erstes Abtriebsglied für die erste Brühkammer und ein zweites Abtriebsglied für die zweite Brühkammer. Die beiden Abtriebsglieder sind derart ausgestaltet, dass das erste Verschlusselement der ersten Brühkammer und das zweite Verschlusselement der zweiten Brühkammer separat angetrieben sind.

Dadurch, dass jede Brühkammer bzw. jedes Verschlusselement ein eigenes Abtriebsglied aufweist, kann sichergestellt werden, dass beispielsweise ein Hub oder Weg des Verschlusselementes oder aber ein Anpressdruck des Verschlusselementes auf die Kapselaufnahme individuell, das heisst für jede Brühkammer separat eingestellt werden kann. Entsprechend können die Brühkammern individuell verschlossen werden.

Die Verschlusselemente können untereinander bedingt beweglich verbunden sein. Entsprechend wird ein Gleichlauf der Bewegungen der beiden Verschlusselemente bewirkt. Unter bedingt beweglich wird verstanden, dass die Verbindung bewusst mit einem Spiel versehen sein, so dass trotz des Gleichlaufs ein individuelles Verschliessen der Brühkammern möglich ist.

Das Getriebe weist ein Zahnradgetriebe auf. Durch die Verwendung eines Zahnradgetriebes können beispielsweise sehr einfach Übersetzungen sowohl der Kraft als auch des Weges erzielt werden. So ist es beispielsweise möglich, dass eine Brühvorrichtung derart ausgestattet wird, dass ein Benutzer der Brühvorrichtung nur eine sehr geringe Kraft aufwenden muss, um die Brühkammern mit einem hohen Anpressdruck verschliessen zu können.

Das Getriebe kann ein Kurvengetriebe aufweisen. Dadurch, dass das Getriebe ein Kurvengetriebe aufweist, kann sehr einfach eine Rotationsbewegung in eine lineare Translationsbewegung übersetzt werden. Ausserdem sind somit Bewegungsabläufe mit einem komplexen Kraft-Weg-Diagramm denkbar.

Die beiden Abtriebsglieder umfassen zwei gleichsinnig drehbare Zahnräder mit je einer Kurvenscheibe. Dadurch, dass sich die beiden Abtriebsglieder gleichsinnig drehen, können die Abtriebsglieder näher beieinander platziert werden. Bei einer Drehung der Abtriebsglieder kollidieren die Kurvenscheiben nicht, da sie gelichsinnig gedreht werden. Ausserdem kann das Antriebsglied zwischen den beiden Abtriebsgliedern platziert werden und diese direkt antreiben. Durch die Verwendung von Zahnrädern ist ein direkter Kraftschluss gewährleistet und es kann nicht zu einer ungewünschten De-Justierung kommen. Ausserdem ist ein gleichzeitiges Einwirken des Antriebes gewährleistete. Dadurch, dass die Kurvenscheibe direkt am Zahnrad des entsprechenden Abtriebsgliedes angeordnet ist, ist wiederum eine direkte Übersetzung einer Drehbewegung in eine beispielsweise lineare Translationsbewegung möglich. Ausserdem kann durch eine Kurvenscheibe sowohl die resultierende Kraft als auch der resultierende Weg des entsprechenden Verschlusselementes individuell eingestellt werden.

Jedes Verschlusselement kann ein Eingriffsglied aufweisen, welches mit einer Steuerkurve der entsprechenden Kurvenscheibe zusammenwirkt. Die Verwendung eines Eingriffsglieds in eine Steuerkurve der Kurvenscheibe erlaubt eine einfache Konstruktion einer Übersetzung einer Drehbewegung in eine Translationsbewegung.

Die Abtriebsglieder mit Zahnrad und Kurvenschiebe können einstückig ausgestaltet sein. Somit wird eine einfache Montierbarkeit gewährleistet. Die Abtriebsglieder können aus einem Kunststoffmaterial gefertigt sein, so dass diese kostengünstig, beispielsweise in Spritzgusstechnik hergestellt werden können. Ausserdem weist je nach Wahl des Kunststoffes die Kurvenscheibe eine geringe Reibung gegenüber dem Eingriffsglied und auch ein geringer Verschleiss gegenüber dem Antriebsglied auf. Entsprechend kann eine konstante Schliesskraft auch über eine grosse Anzahl von Schliessbewegungen gewährleistet werden.

Die Steuerkurve kann einen Totpunkt aufweisen, bei dessen Überschreitung mit dem Eingriffsglied das Verschlusselement verriegelt ist. Ein solcher Totpunkt ermöglicht es, dass bei der Zubereitung eines Getränks, welche üblicherweise unter hohem Druck in der Brühkammer erfolgt, das Verschlusselement nicht von der Kapselaufnahme abgehoben wird. Insbesondere wird die Kraftwirkung auf das Antriebsglied unterbrochen. Entsprechend kann gewährleistet werden, dass die Brühkammer dicht verschlossen ist. Es sind keine zusätzlichen Verriegelungsmittel nötig.

Das Eingriffsglied kann mittels einer exzentrischen Hülse im Verschlusselement angeordnet sein. Durch eine Anordnung mittels einer exzentrischen Hülse kann durch eine einfache Drehung dieser Hülse eine Feinjustierung der Positionierung des Verschlusselementes vorgenommen werden. Es versteht sich von selbst, dass hierzu die exzentrische Hülse drehbeweglich im Verschlusselement gelagert sein muss. Alternativ kann auch das Eingriffsglied direkt exzentrisch ausgestaltet sein, so dass die zusätzliche Hülse eingespart werden kann. Dabei ist es irrelevant, ob das Eingriffsglied im Bereich seines Eingriffs in die Kurvenschiebe und/oder im Bereich seiner Befestigung im Verschlusselement exzentrisch ausgestaltet ist.

Die exzentrische Hülse oder das exzentrische Eingriffsglied können mittels eines Sicherungselementes, insbesondere in Form eines Sicherungsstiftes oder einer Sicherungsklammer, fixiert werden, so dass eine ungewollte Drehbewegung verhindert wird. Hierzu weist die exzentrische Hülse oder das exzentrische Eingriffsglied beispielsweise eine Bohrung oder eine Klemmfläche zur Aufnahme des Sicherungselementes auf. Es versteht sich von selbst, dass je nach Ausgestaltung auch das Verschlusselement eine Bohrung oder eine Klemmfläche zur Aufnahme des Sicherungselementes aufweist.

Die exzentrische Hülse oder das exzentrische Eingriffsglied kann in mehreren, insbesondere in 2, 3 oder 4 unterschiedlichen Positionen fixierbar sein. Entsprechend sind beispielsweise mehrere Bohrungen oder Klemmflächen zur Aufnahme des Sicherungselementes vorhanden.

Jedes Verschlusselement kann von einer Schliessposition in eine offene Position verschiebbar sein. Durch ein Verschieben des Verschlusselementes in eine offene Position ist beispielsweise ein einfacher Zugriff auf die Kapselaufnahme möglich.

Zwischen der Schliessposition und der offenen Position kann ein Hub von beispielsweise 0,5 mm bis 50 mm, bevorzugt von 7 mm bis 35 mm, besonders bevorzugt von 15 mm bis 25 mm erfolgen.

Die Verschlusselemente können eine Geradeführung aufweisen, welche eine Bewegungsrichtung der Verschlusselemente vorgeben. Durch diese Geradeführung kann sichergestellt werden, dass sich die Verschlusselemente bei der Bewegung in die Schliessposition nicht verkanten und entsprechend die Kapselaufnahme umlaufend gleichmässig verschlossen wird. Beispielsweise kann so eine Dichtfläche des Verschlusselementes planparallel auf eine korrespondierende Dichtfläche der Kapselaufnahme oder einer in der Kapselaufnahme angeordneten Kapsel gewährleistet werden. Die Geradeführung kann auch ein Spiel aufweisen, so dass eine Selbstjustierung der Ausrichtung der Verschlusselemente erfolgt.

Ein Hub zwischen der Schliessposition und der offenen Position und/oder eine Anpresskraft der Versuchselemente in der Schliessposition können für jede Brühkammer separat einstellbar sein. Somit sind unterschiedliche Einstellungen für die beiden Brühkammern möglich. Ausserdem kann durch die Ausgestaltung der Steuerkurve auf der entsprechenden Kurvenscheibe sowohl der Hub als auch die Anpresskraft der Verschlusselemente beeinflusst werden. Durch die Verwendung einer geeigneten Steuerkurve können beispielsweise sogar die Kräfte und/oder Wege beim Öffnen bzw. beim Schliessen unterschiedlich eingestellt werden. Selbstverständlich ist der resultierende Hub dabei sowohl beim Öffnen als auch beim Schliessen gleich gross.

Die Brühkammern können unterschiedlich ausgestaltet sein, insbesondere kann die erste Brühkammer eine Aufstechplatte und die zweite Brühkammer eine oder mehrere Injektornadel zum Penetrieren eines Deckels und zum Einspritzen einer Flüssigkeit in eine in der entsprechenden Brühkammer aufgenommene Kapsel aufweisen. Ebenso ist es denkbar, dass die Brühkammern unterschiedliche Grössen aufweisen. Somit können beispielsweise Kapseln unterschiedlicher Hersteller und/oder mit unterschiedlichen Inhaltsstoffen und/oder unterschiedlichen Inhaltsvolumen aufgenommen werden.

Die Aufstechplatte und die Injektornadel können jeweils am entsprechenden Verschlusselement der Brühkammer angeordnet sein. Durch diese Anordnung wird gewährleistet, dass beim Verschliessen der Brühkammer, also beim Bewegen des Verschlusselementes in die Schliessposition auf der Kapselaufnahme, ein Deckel oder ein Boden einer Kapsel penetriert wird, sodass eine Flüssigkeit in die Kapsel eindringen kann. Je nach Ausgestaltung der Kapsel bzw. nach Inhaltsstoff der Kapsel ist es vorteilhaft, wenn eine Aufstechplatte, mit mehreren Penetrationselementen oder aber eine Injektionsnadel mit nur einem oder mehreren Wassereinlässen verwendet wird.

Umlaufend um die Injektionsnadel kann eine Dichtung angeordnet sein, welche direkt die Penetrationsöffnung auf dem Kapseldeckel abdichtet. Da üblicherweise im Kapselinnern durch die eingespritzte Flüssigkeit ein hoher Druck herrscht, wird der Deckel gegen diese Dichtung gepresst. Somit kann verhindert werden, dass das Wasser oder gar das zubereitete Nahrungsmittel durch die Penetrationsöffnung austritt und die Brühkammer verschmutzt.

Das Getriebe kann derart ausgestaltet sein, dass eine Kraftwirkung auf das Verschlusselement zentrumssymmetrisch, insbesondere beidseitig erfolgt. Beispielsweise kann ein Eingriffsglied des Verschlusselementes beidseitig des Verschlusselementes in eine Steuerkurve des Abtriebsglieds eingreifen. Durch eine zentrumssymmetrische Kraftwirkung kann gewährleistet werden, dass das Verschlusselement möglichst gleichmässig auf die Kapselaufnahme aufgesetzt wird und diese rundumlaufend verschliesst. Das gesamte Getriebe kann spiegelsymmetrisch aufgebaut sein, so dass je Verschlusselement die Abtriebsglieder und die Kurvenscheiben beidseits angeordnet sind. Beispielsweise kann ein Antriebshebel mit einem Zahnkranz ausgestaltet sein, welcher mit einem zentralen Zahnrad zusammenwirkt. Dieses zentrale Zahnrad ist beispielsweise mit seiner Drehwelle direkt mit dem Antriebsglied, welches die Abtriebsglieder antreibt, verbunden. Beidseitig vom zentralen Zahnrad kann auf dessen Drehwelle ein Antriebsglied angeordnet sein, so dass einfach ein spiegelsymmetrischer Aufbau erfolgen kann. Die Spiegelsymmetrie hat den Vorteil, dass Kräfte drehmomentfrei auf das oder die nachfolgenden Glieder des Getriebes weitergegeben werden können. Somit wird die Gefahr des Verkantens der Verschlusselemente zumindest in einer Richtung eliminiert.

Die Kapselaufnahmen können in einem insbesondere gemeinsamen Einschub angeordnet sein, welcher von der Brühvorrichtung entfernbar ist. Durch die Anordnung der Kapselaufnahmen in einem entfernbaren Einschub wird ein sehr einfaches Auswechseln bzw. neu Befüllen der Kapselaufnahmen mit den entsprechenden Kapseln ermöglicht. Gleichzeitig wird ein einfaches Reinigen der Kapselaufnahme ermöglicht. Durch Anordnung der Kapselaufnahmen in einem gemeinsamen Einschub wird das Handling nochmals vereinfacht. Sowohl am Einschub als auch an der Brühvorrichtung bzw. an einem Gehäuse der Brühvorrichtung können korrespondierende Führungsschienen vorhanden sein, welche ein einfaches Entfernen und wieder Einsetzen des Einschubes ermöglichen. Die Führungsschienen können Rastelemente aufweisen, um ein korrektes Einsetzen des Einschubes anzuzeigen.

Ein weiterer Aspekt der vorliegenden Erfindung betrifft eine Getränkezubereitungsmaschine, welche eine Brühvorrichtung, wie vorgängig beschrieben, umfasst. Eine solche Maschine erlaubt beispielsweise die Zubereitung eines Mischgetränkes, durch Verwendung beispielsweise einer Kaffeekapsel und einer Milchkapsel. Es versteht sich von selbst, dass die Getränkezubereitungsmaschine entsprechende Mittel aufweisen muss, um beispielsweise Wasser aufzuwärmen und in die beiden Brühkammern einspritzen zu können.

Anhand von Figuren, welche lediglich Ausführungsbeispiele darstellen, wird die Erfindung im Folgenden näher erläutert. Es zeigen:
- Figur 1:: eine erfindungsgemässe Getränkezubereitungsmaschine in einer perspektivischen Ansicht,
- Figur 2:: eine erfindungsgemässe Brühvorrichtung, wobei das Gehäuse teilweise entfernt wurde,
- Figur 3:: die Brühvorrichtung aus Figur 2, wobei zusätzlich die Verschlusselemente der beiden Brühkammern entfernt wurden,
- Figur 4:: die Brühvorrichtung aus Figur 2 mit entferntem Einschub in einer perspektivischen Ansicht von unten,
- Figur 5a:: ein Abtriebsglied in halb transparenter Darstellung mit einem entsprechenden Eingriffsglied,
- Figur 5b:: das Abtriebsglied aus Figur 5a, wobei das Abtriebsglied eine Drehbewegung ausgeführt hat,
- Figur 6:: das Abtriebsglied und das Eingriffsglied aus Figur 5 in einer perspektivischen Darstellung,
- Figur 7:: ein Einschub mit zwei unterschiedlichen Kapselaufnahmen in perspektivischer Darstellung,
- Figur 8:: der Einschub aus Figur 7 in perspektivischer Darstellung von unten,
- Figur 9:: eine vergrösserte Darstellung des Bereichs des Eingriffselementes und seiner Anordnung mittels einer exzentrischen Hülse im Verschlusselement gemäss Figur 2 und 4,
- Figur 10a:: eine Ansicht auf die exzentrische Hülse gemäss Figur 9 zur Feinjustierung des Verschlusselementes in einer erste Position,
- Figur 10b:: eine Ansicht auf die exzentrische Hülse gemäss Figur 9 zur Feinjustierung des Verschlusselementes in einer zweiten Position, und
- Figur 10c:: eine Ansicht auf die exzentrische Hülse gemäss Figur 9 zur Feinjustierung des Verschlusselementes in einer dritten Position.

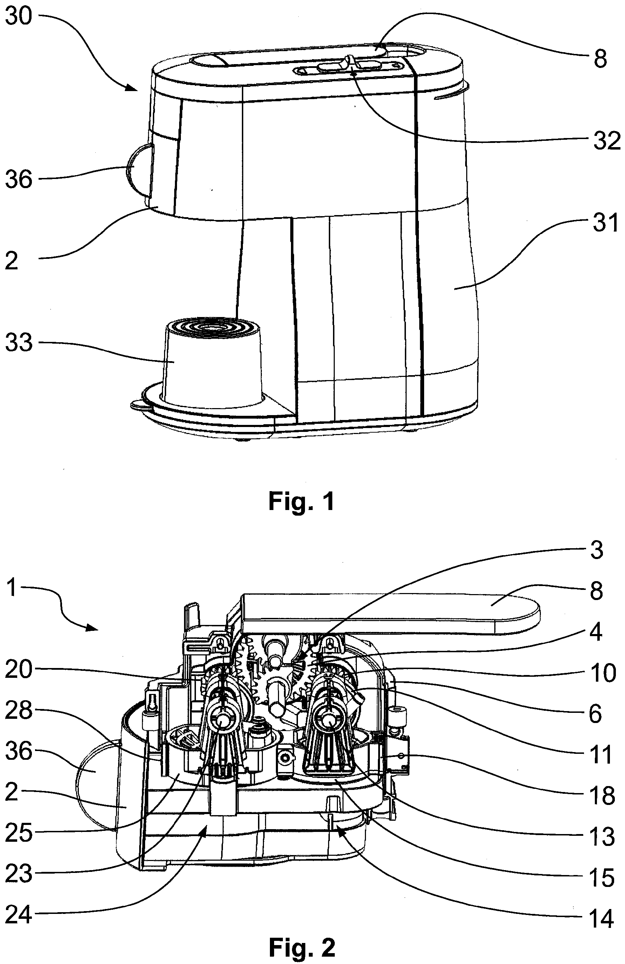

Figur 1 zeigt eine erfindungsgemässe Getränkezubereitungsmaschine 30 in einer perspektivischen Ansicht. Deutlich zu erkennen ist ein Antriebshebel 8 sowie ein Steuerelement 32, welche beide auf der Oberseite der Getränkezubereitungsmaschine 30 angeordnet sind. Weiter ist in bekannter Manier ein Wassertank 31 auf der Rückseite der Getränkezubereitungsmaschine 30 angeordnet. Auf der dem Wassertank 31 gegenüberliegenden Seite ist eine Tassenablage 33 dargestellt, welche gleichzeitig als Abtropfgitter dient. Ebenfalls auf dieser Seite der Getränkezubereitungsmaschine 30 ist ein Einschub 2 mit einem Griff 36 zu erkennen, welcher aus der Getränkezubereitungsmaschine 30 entfernbar ist und mit Portionenkapseln bestückt werden kann. Die Getränkezubereitungsmaschine 30 ist mit einer Brühvorrichtung 1 (siehe Figuren 2 bis 4) ausgerüstet, um ein flüssiges Nahrungsmittel aus den Portionenkapseln zubereiten zu können.

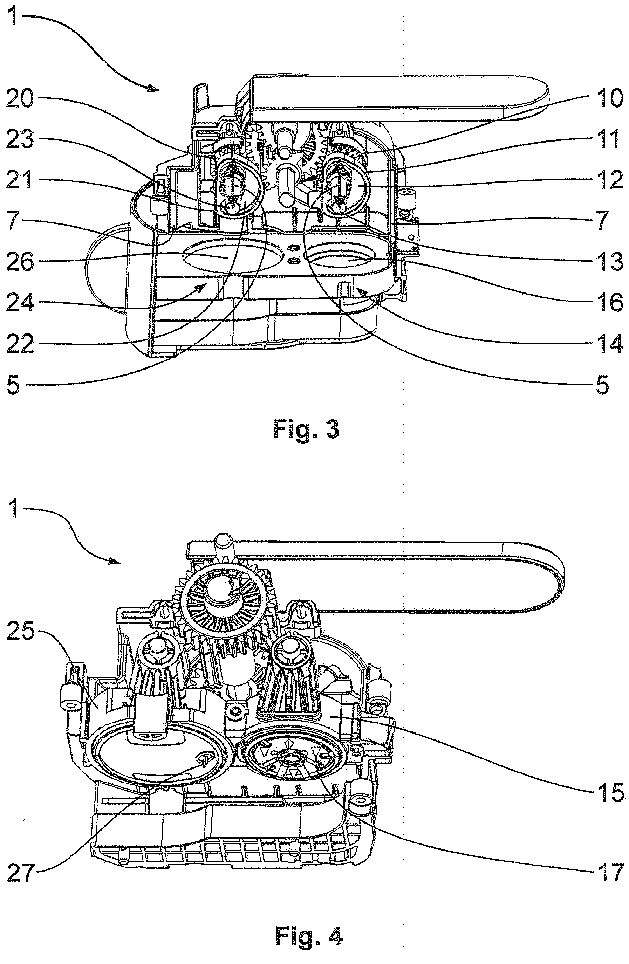

Die Figur 2 zeigt eine erfindungsgemässe Brühvorrichtung 1 mit zwei Brühkammern 14, 24. Dabei ist ein Teil des Gehäuses 6 entfernt, sodass ein Einblick in das Innere der Brühvorrichtung 1 ermöglicht wird. Deutlich zu erkennen ist wiederum der Einschub 2 mit seinem Griff 36, welcher wie bereits zur Figur 1 beschrieben, aus der Getränkezubereitungsmaschine bzw. der Brühvorrichtung 1 zum Bestücken mit Kaffeekapseln entfernt werden kann. Die Brühvorrichtung 1 ist im geschlossenen Zustand dargestellt, das heisst die Brühkammern 14, 24 sind verschlossen. Mittels eines Antriebshebels 8 kann ein Getriebe 3 betätigt werden, welches ein Öffnen der Brühkammern 14, 24 durch Anheben zweier Verschlusselemente 15, 25 ermöglicht. Das Getriebe 3 weist ein Antriebsglied 4 in Form eines Zahnrades auf, dessen Welle über ein zentrales Zahnrad direkt von einem Zahnkranz des Antriebshebels 8 angetrieben wird. Über dieses Antriebsglied 4 werden pro Seite zwei Abtriebsglieder 10, 20, welche ebenfalls über eine Zahnradstruktur verfügen, angetrieben. Die Abtriebsglieder 10, 20 weisen beide eine Kurvenscheibe 11, 21 (siehe Figur 3) auf, mittels welcher die Drehbewegung des Abtriebsglieds 10, 20 in eine translatorische Hubbewegung der Verschlusselemente 15, 25 übersetzt wird. Die Verschlusselemente 15, 25 weisen je ein Eingriffsglied 13, 23 auf, welches in eine Steuerkurve 12, 22 (siehe Figur 3) der entsprechenden Kurvenscheibe 11, 21 eingreift und zusammen wirkt. Um einen geraden Hub zu gewährleisten, weisen die Verschlusselemente 15, 25 Geradeführungen 18, 28 auf, welche mit entsprechenden Führungsschienen 7 (siehe Figur 3) zusammenwirken. Das Getriebe 3 ist spiegelsymmetrisch aufgebaut, wobei die Elemente der einen Seite entfernt wurden. Die Symmetrieebene verläuft dabei mittig und senkrecht durch eine Drehachse des Antriebshebels 8 sowie mittig durch die beiden Verschlusselemente 15, 25. Konkret heisst dies jedoch, dass das Getriebe zwei Antriebsglieder aufweist, welche beidseits des zentralen Zahnrades und der Symmetrieebene angeordnet sind. Entsprechend sind je Verschlusselement auch zwei Abtriebsglieder mit Kurvenscheibe vorhanden. Somit können die Eingriffsglieder der beiden Verschlusselemente mit beiden Enden in die entsprechenden Kurvenscheiben eingreifen, so dass keine Gefahr des Verkantens existiert.

Die Figur 3 zeigt die Brühvorrichtung 1 aus Figur 2, wobei zusätzlich die beiden Verschlusselemente 15, 25 (siehe Figur 2) entfernt wurden. Entsprechend ist der Blick frei auf zwei Kapselaufnahmen 16, 26, welche zusammen mit den entsprechenden Verschlusselementen die Brühkammern 14, 24 bilden. Von den beiden Verschlusselementen sind lediglich die beiden Eingriffsglieder 13, 23 dargestellt, welche mit den Kurvenscheiben 11, 21 der beiden Abtriebsglieder 10, 20 zusammenwirken. Die beiden Kurvenscheiben 11, 21 weisen hierzu Steuerkurven 12, 22 auf, in welchen die beiden Eingriffsglieder 13, 23 verschiebbar gelagert sind. Durch das Entfernen der beiden Verschlusselemente werden ausserdem die Führungsschienen 7 am Gehäuse der Brühvorrichtung 1 sichtbar, welche zusammen mit den korrespondierenden Geradeführungen 18, 28 (siehe Figur 2) eine gerade Verschiebung der beiden Verschlusselemente in eine definierte Bewegungsrichtung 5 erzwingen.

In Figur 4 ist die Brühvorrichtung 1 aus Figur 2 mit entferntem Einschub in einer perspektivischen Ansicht von unten abgebildet. Somit werden die Penetrationsmittel der Verschlusselemente 15, 25 ersichtlich. Das erste Verschlusselement 15 ist mit einer Aufstechplatte 17 versehen, welche mehrere Aufstechdorne aufweist. Eine solche Aufstechplatte 17 ist insbesondere dann vorteilhaft, wenn ein Deckel einer Kapsel penetriert werden soll, deren Inhaltsstoffe ein gleichzeitiges und gleichmässiges Benetzen über eine grössere Oberfläche erfordert. Dies ist beispielsweise bei einer Kaffeekapsel der Fall. Das zweite Verschlusselement 25 weist hingegen eine Injektornadel 27 auf, welche spritzenähnlich den Deckel einer entsprechenden Kapsel durchdringen kann und somit ein direktes Einspritzen einer Flüssigkeit in die Kapsel erlaubt. Ebenso sind auch mehrere Injektornadeln denkbar, so dass der Deckel eine Kapsel an mehreren Orten durchstochen und die Flüssigkeit durch mehrere Nadeln eingespritzt wird. Ein solches Einbringen einer Flüssigkeit ist dann vorteilhaft, wenn die Inhaltsstoffe der Kapsel beim Einspritzen der Flüssigkeit verwirbelt und durchmischt werden sollen, was insbesondere bei einer Auflösung einer Nahrungsmittelsubstanz gewünscht wird.

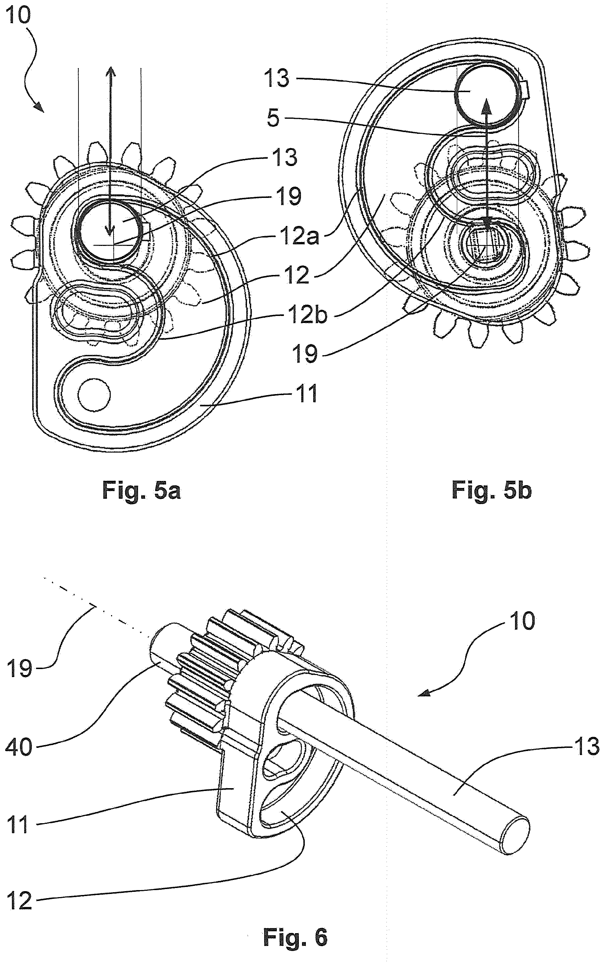

In den Figuren 5a und 5b ist ein Abtriebsglied 10 in halbtransparenter Darstellung mit einem Eingriffsglied 13 dargestellt. diejenigen Bereiche des Abtriebsgliedes, welche auf der Rückseite angeordnet sind, sind durch punktierte Linien dargestellt. Dabei zeigt die Figur 5a das Eingriffsglied 13 in der Position bei geschlossener Brühkammer, während in der Figur 5b das Eingriffsglied 13 bei offener Brühkammer, also bei abgehobenem Verschlusselement darstellt. Durch die halbtransparente Darstellung ist eine rückseitig angeordnete Zahnradverzahnung, welche mit dem Antriebsglied 4 (siehe Figur 2) zusammenwirkt, ersichtlich. Ebenfalls zu erkennen ist, dass das Abtriebsglied 10 neben der Zahnradverzahnung auch eine Kurvenscheibe 11 mit einer Steuerkurve 12 umfasst. In dieser Steuerkurve 12 ist das Eingriffsglied 13 beweglich gelagert. Das Abtriebsglied 10 aus Figur 5a kann sich gegen den Urzeigersinn um eine Drehachse 19 drehen, was bei einer seitlichen Fixierung des Eingriffsglieds 13 in einer translatorischen Hubbewegung in Bewegungsrichtung 5 resultiert. Die seitliche Führung des Eingriffsgliedes 13 ist mit vertikalen Hilfslinien dargestellt. In der Figur 5b ist die Drehung des Abtriebsgliedes 10 abgeschlossen und der Hub des Eingriffsgliedes 13 abgeschlossen. Die Steuerkurve 12 ist als gekrümmte Nut in der Kurvenscheibe 11 ausgestaltet. Die entsprechenden Seitenwände 12a, 12b der Steuerkurve 12 zwingen das Eingriffsglied 13 dazu, die Hubbewegung auszuführen. Bei geschlossener Brühkammer, also bei abgesenkten Verschlusselementen wie in den Figuren 2 und 3 dargestellt, ist die Kurvenscheibe 11 so weit gedreht, dass das Eingriffsglied 13 in der Steuerkurve 12 einen Totpunkt überschritten hat und somit in seiner Stellung blockiert ist. Selbst ein hoher Einpressdruck in der geschossenen Brühkammer, welcher bis zu 20 bar betragen kann, ist nicht in der Lage das Verschlusselement von der Kapselaufnahme abzuheben. Erst durch eine vom Antriebshebel bewirkte Drehung der Kurvenscheibe 11 kann das Eingriffsglied 13 und somit das Verschlusselement von seiner verriegelten Schliessposition wieder wegbewegt und angehoben werden.

In Figur 6 ist das Antriebsglied 10 mit dem Eingriffsglied 13 aus Figur 5 in perspektivischer Darstellung nochmals abgebildet. Dabei ist deutlich ersichtlich, dass die Kurvenscheibe 11 eine Steuerkurve 12 aufweist. Weiter ersichtlich ist eine Welle 40, welche zum drehgelagerten Befestigung des Abtriebsgliedes 10 im Gehäuse der Brühvorrichtung dient. Entsprechend definiert diese Welle 40 auch die Drehachse 19.

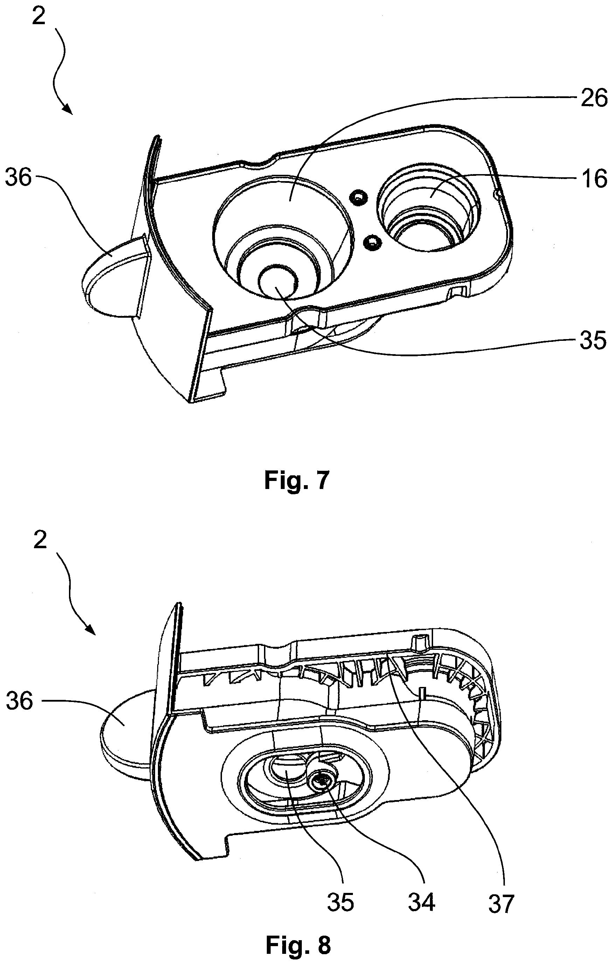

In den Figuren 7 und 8 ist jeweils ein Einschub 2 in perspektivischer Ansicht dargestellt, wobei die Figur 7 eine Ansicht von oben die Figur 8 eine Ansicht von unten zeigt. Der Einschub 2 weist zwei unterschiedliche Kapselaufnahmen 16, 26 auf, welche zur Aufnahme von unterschiedlichen Portionenkapseln vorgesehen sind. Ausserdem ist der Einschub 2 mit einem Griff 36 versehen, welcher ein einfaches Entfernen aus einer Getränkezubereitungsmaschine 30 (siehe Figur 1) ermöglicht. Um das in den beiden Kapselaufnahmen 16, 26 zubereitete flüssige Nahrungsmittel in eine gemeinsame Tasse ausfliessen zu lassen, sind auf der Unterseite des Einschubs 2 ein Getränkeauslass 34 sowie eine Auslassöffnung 35 ersichtlich. Der Getränkeauslass 34 dient als Auslass für die erste Kapselaufnahme 16. Die Auslassöffnung 35 der zweiten Kapselaufnahme 26 ist derart ausgestaltet, dass hier eine Kapsel mit einem entsprechenden Auslassstutzen eingesetzt werden kann, wobei der Auslassstutzen der Kapsel durch die Auslassöffnung 35 hindurch passt. Der Auslassstutzen der Kapsel dient dabei direkt als Getränkeauslass für das flüssige Nahrungsmittel aus der Kapsel der Kapselaufnahme 26. Der Einschub 2 ist schlittenartig ausgestaltet und weist beidseitig Führungselemente 37 auf, welche in korrespondierende Führungsbahnen einer Brühvorrichtung oder einer Getränkezubereitungsmaschine passen.

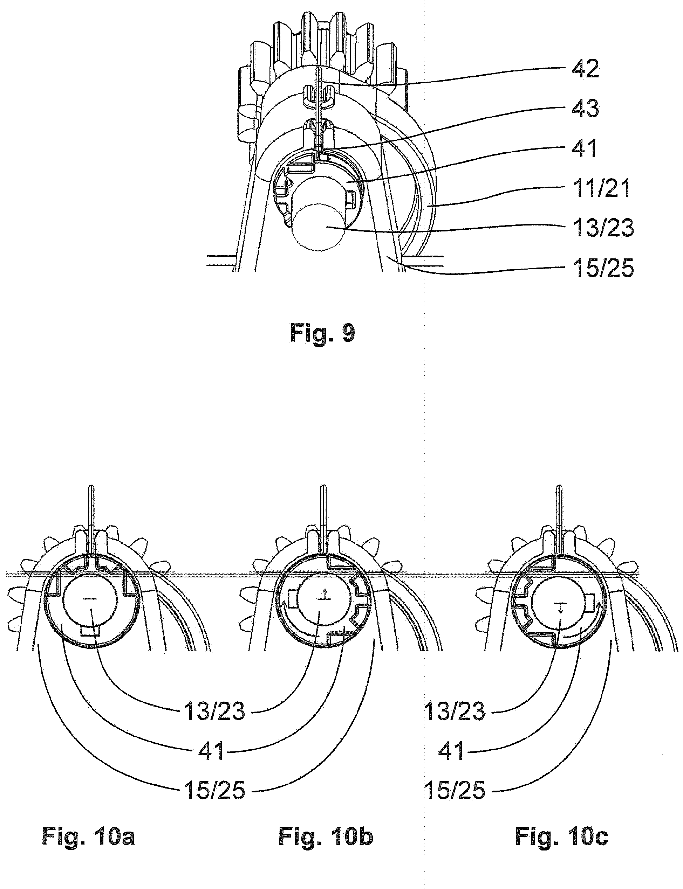

Die Figur 9 zeigt eine vergrösserte Darstellung des Bereichs des Eingriffselementes 13, 23 und seiner Anordnung mittels einer exzentrischen Hülse 41 im Verschlusselement 15, 25 gemäss den Figur 2 und 4. Das Eingriffselement 13, 23 ist dabei als zylindrischer Bolzen ausgestaltet und in der exzentrischen Hülse 41 gelagert. Durch eine Drehung der exzentrischen Hülse 41 lässt sich die Ausrichtung des Verschlusselementes 15, 25 gegenüber des Eingriffselementes 13, 23 minimal verschieben, siehe hierzu die Figuren 10a bis 10c. Durch eine solche Verschiebung relativ zueinander kann die absolute Lage des Verschlusselementes 15, 25 beispielsweise in seiner Schliessposition beeinflusst werden. Toleranzen, welche insbesondere bei der Fertigung nicht vermeidbar sind können entsprechend korrigiert werden, so dass trotzdem ein dichtes Verschliessen der Brühkammer möglich ist. Um ein ungewolltes Verstellen der exzentrischen Hülse 41 zu vermeiden, weisen sowohl die exzentrische Hülse 41 als auch das Verschlusselement 41 wenigstens eine Bohrung 43 auf, um einen Sicherungsstift 42 aufzunehmen. Der Sicherungsstift 42 ist dabei bügelförmig als Klammer ausgestaltet. Die exzentrische Hülse 41 weist vier Bohrungen 43 auf, so dass die Hülse in mehreren Drehpositionen fixiert werden kann. Selbstverständlich sind auch mehr als vier Bohrungen und entsprechend mehr Drehpositionen denkbar.

In den Figuren 10a bis 10c sind verschiedene Positionen der exzentrischen Hülse 41 dargestellt. Drei Hilfslinien in den Figuren markieren die relativen Verschiebungen zwischen Eingriffselement 13, 23 und Verschlusselement 25, 25. In der Figur 10a ist die exzentrische Hülse 41 in einer mittleren Position dargestellt. In der Figur 10b zeigt die obere Hilfslinie die durch eine 90°-Drehung der exzentrischen Hülse 41 erreichte relative Verschiebung zwischen dem Eingriffselement 13, 23 und dem Verschlusselement 15, 25. In analoger Weise ist in der Figur 10c die exzentrische Hülse 41 in einer dritten Stellung gezeigt. Die dritte Hilfslinie zeigt an, dass jetzt die Verschiebung zwischen dem Eingriffselement 13, 23 und dem Verschlusselement 15, 25 in die entgegengesetzte Richtung erfolgt ist.

## Patentansprüche

1. Brühvorrichtung (1) für eine Getränkezubereitungsmaschine für Kapseln mit zwei separaten Brühkammern (14, 24), umfassend eine erste Kapselaufnahme (16) und ein erstes Verschlusselement (15) für die erste Brühkammer (14) sowie eine zweite Kapselaufnahme (26) und ein zweites Verschlusselement (25) für die zweite Brühkammer (24) und ein Getriebe (3) für die Betätigung der beiden Verschlusselemente (15, 25), wobei das Getriebe (3) ein gemeinsames Antriebsglied (4), sowie ein erstes Abtriebsglied (10) für die erste Brühkammer (14) und ein zweites Abtriebsglied (20) für die zweite Brühkammer (24) umfasst, **dadurch gekennzeichnet, dass** das Getriebe (3) ein Zahnradgetriebe aufweist, wobei die beiden Abtriebsglieder (10, 20) zwei gleichsinnig drehbare Zahnräder mit je einer Kurvenscheibe (11, 21) umfassen.

2. Brühvorrichtung (1) nach Anspruch 1, **dadurch gekennzeichnet, dass** die beiden Verschlusselemente (15, 25) untereinander bedingt beweglich verbunden sind.

3. Brühvorrichtung (1) nach Anspruch 1 oder 2, **dadurch gekennzeichnet, dass** das Getriebe (3) ein Kurvengetriebe aufweist.

4. Brühvorrichtung (1) nach einem der vorhergehenden Ansprüche, **dadurch gekennzeichnet, dass** jedes Verschlusselement (15, 25) ein Eingriffsglied (13, 23) aufweist, welches mit einer Steuerkurve (12, 22) der entsprechenden Kurvenscheibe (11, 21) zusammenwirkt.

5. Brühvorrichtung (1) nach Anspruch 4, **dadurch gekennzeichnet, dass** die Steuerkurve (12, 22) einen Totpunkt aufweist, bei dessen Überschreitung mit dem Eingriffsglied (13, 23) das Verschlusselement (15, 25) verriegelt ist.

6. Brühvorrichtung (1) nach Anspruch 4 oder 5, **dadurch gekennzeichnet, dass** das Eingriffsglied (13, 23) mittels einer exzentrischen Hülse (39) im Verschlusselement (15, 25) angeordnet ist.

7. Brühvorrichtung (1) nach einem der vorhergehenden Ansprüche, **dadurch gekennzeichnet, dass** die Verschlusselemente (15, 25) eine Geradeführung (18, 28) aufweisen, welche eine Bewegungsrichtung (5) der Verschlusselemente (15, 25) vorgeben.

8. Brühvorrichtung (1) nach einem der vorhergehenden Ansprüche, **dadurch gekennzeichnet, dass** ein Hub zwischen einer Schliessposition und einer offenen Position und/oder eine Anpresskraft der Verschlusselemente (15, 25) in der Schliessposition für jede Brühkammer (14, 24) separat einstellbar sind.

9. Brühvorrichtung (1) nach einem der vorhergehenden Ansprüche, **dadurch gekennzeichnet, dass** die Brühkammern (14, 24) unterschiedlich ausgestaltet sind, insbesondere die erste Brühkammer (14) eine Aufstechplatte (17) und die zweite Brühkammer (24) eine oder mehrere Injektornadel (27) zum Penetrieren eines Deckels und zum Einspritzen einer Flüssigkeit in eine in der entsprechenden Brühkammer (14, 24) aufgenommene Kapsel aufweist.

10. Brühvorrichtung (1) nach Anspruch 9, **dadurch gekennzeichnet, dass** die Aufstechplatte (17) und die Injektornadel (27) am entsprechenden Verschlusselement (15, 25) der Brühkammern (14, 24) angeordnet sind.

11. Brühvorrichtung (1) nach einem der vorhergehenden Ansprüche, **dadurch gekennzeichnet, dass** das Getriebe (3) derart ausgestaltet ist, dass eine Kraftwirkung auf das Verschlusselement (15, 25) zentrumssymmetrisch, insbesondere beidseitig erfolgt.

12. Brühvorrichtung (1) nach einem der vorhergehenden Ansprüche, **dadurch gekennzeichnet, dass** die Kapselaufnahmen (16, 26) in einem insbesondere gemeinsamen Einschub (2) angeordnet sind, welcher von der Brühvorrichtung (1) entfernbar ist.

13. Getränkezubereitungsmaschine (30), insbesondere Kaffeemaschine, umfassend eine Brühvorrichtung (1) nach einem der vorhergehenden Ansprüche.

## Claims

1. Brewing device (1) which is intended for a beverage-making machine for capsules and has two separate brewing chambers (14, 24), comprising a first capsule holder (16) and a first closure element (15) for the first brewing chamber (14) and a second capsule holder (26) and a second closure element (25) for the second brewing chamber (24) and also comprising a mechanism (3) for actuating the two closure elements (15, 25), wherein the mechanism (3) comprises a common drive member (4) and also a first output member (10) for the first brewing chamber (14) and a second output member (20) for the second brewing chamber (24), **characterized in that** the mechanism (3) has a toothed-gear mechanism, wherein the two output members (10, 20) comprise two gearwheels which can be rotated in the same direction and each have a cam disk (11, 21).

2. Brewing device (1) according to Claim 1, **characterized in that** the two closure elements (15, 25) are connected to one another such that they can be moved to a limited extent.

3. Brewing device (1) according to Claim 1 or 2, **characterized in that** the mechanism (3) has a cam mechanism.

4. Brewing device (1) according to one of the preceding claims, **characterized in that** each closure element (15, 25) has an engagement member (13, 23), which interacts with a control curve (12, 22) of the corresponding cam disk (11, 21).

5. Brewing device (1) according to Claim 4, **characterized in that** the control curve (12, 22) has a dead center, the closure element (15, 25) being locked by the engagement member (13, 23) when the dead center is passed.

6. Brewing device (1) according to Claim 4 or 5, **characterized in that** the engagement member (13, 23) is arranged in the closure element (15, 25) by means of an eccentric sleeve (39).

7. Brewing device (1) according to one of the preceding claims, **characterized in that** the closure elements (15, 25) have a rectilinear guide (18, 28), and each of these rectilinear guides predetermines a movement direction (5) of the closure elements (15, 25).

8. Brewing device (1) according to one of the preceding claims, **characterized in that** an amount of displacement travel between a closed positon and an open position and/or a contact-pressure force of the closure elements (15, 25) in the closed position can be adjusted separately for each brewing chamber (14, 24).

9. Brewing device (1) according to one of the preceding claims, **characterized in that** the brewing chambers (14, 24) are configured differently, in particular the first brewing chamber (14) has a piercing plate (17) and the second brewing chamber (24) has one or more injector needles (27) for penetrating a cover and for injecting a liquid into a capsule accommodated in the corresponding brewing chamber (14, 24).

10. Brewing device (1) according to Claim 9, **characterized in that** the piercing plate (17) and the injector needle (27) are arranged on the appropriate closure element (15, 25) of the brewing chambers (14, 24).

11. Brewing device (1) according to one of the preceding claims, **characterized in that** the mechanism (3) is configured such that it subjects the closure element (15, 25) to force in a center-symmetrical manner, in particular on both sides.

12. Brewing device (1) according to one of the preceding claims, **characterized in that** the capsule holders (16, 26) are arranged in an in particular common insert unit (2), which can be removed from the brewing device (1).

13. Beverage-making machine (30), in particular a coffee machine, comprising a brewing device (1) according to one of the preceding claims.

## Revendications

1. Dispositif d'infusion (1) pour une machine de préparation de boissons pour capsules, le dispositif d'infusion comprenant deux chambres à infusion séparées (14, 24), comportant un premier logement de capsule (16) et un premier élément de fermeture (15) pour la première chambre à infusion (14) ainsi qu'un deuxième logement de capsule (26) et un deuxième élément de fermeture (25) pour la deuxième chambre à infusion (24) et une transmission (3) pour l'actionnement des deux éléments de fermeture (15, 25), la transmission (3) comportant un organe d'entraînement commun (4), ainsi qu'un premier organe de sortie (10) pour la première chambre à infusion (14) et un deuxième organe de sortie (20) pour la deuxième chambre à infusion (24), **caractérisé en ce que** la transmission (3) comprend une transmission par engrenage, les deux organes de sortie (10, 20) comportant deux roues dentées pouvant tourner dans le même sens et pourvues respectivement d'un disque à came (11, 21).

2. Dispositif d'infusion (1) selon la revendication 1, **caractérisé en ce que** les deux éléments de fermeture (15, 25) sont reliés l'un à l'autre de manière mobile relativement.

3. Dispositif d'infusion (1) selon la revendication 1 ou 2, **caractérisé en ce que** la transmission (3) comprend une transmission à came.

4. Dispositif d'infusion (1) selon l'une quelconque des revendications précédentes, **caractérisé en ce que** chaque élément de fermeture (15, 25) comprend un organe d'entrée en prise (13, 23), lequel coopère avec une came de commande (12, 22) du disque à came (11, 21) correspondant.

5. Dispositif d'infusion (1) selon la revendication 4, **caractérisé en ce que** la came de commande (12, 22) présente un point mort, en cas de dépassement duquel l'élément de fermeture (15, 25) est verrouillé à l'aide de l'organe d'entrée en prise (13, 23).

6. Dispositif d'infusion (1) selon la revendication 4 ou 5, **caractérisé en ce que** l'organe d'entrée en prise (13, 23) est disposé dans l'élément de fermeture (15, 25) au moyen d'une douille excentrique (39).

7. Dispositif d'infusion (1) selon l'une quelconque des revendications précédentes, **caractérisé en ce que** les éléments de fermeture (15, 25) comprennent un guide rectiligne (18, 28), lesquels définissent une direction de déplacement (5) des éléments de fermeture (15, 25).

8. Dispositif d'infusion (1) selon l'une quelconque des revendications précédentes, **caractérisé en ce qu'**une course entre une position de fermeture et une position ouverte et/ou une force de pression des éléments de fermeture (15, 25) dans la position de fermeture peuvent être réglées séparément pour chaque chambre à infusion (14, 24) .

9. Dispositif d'infusion (1) selon l'une quelconque des revendications précédentes, **caractérisé en ce que** les chambres à infusion (14, 24) sont conçues différemment, en particulier la première chambre à infusion (14) comprend une plaque de perçage (17) et la deuxième chambre à infusion (24) comprend une ou plusieurs aiguilles d'injecteur (27) servant à pénétrer dans un couvercle et à injecter un liquide dans une capsule logée dans la chambre à infusion (14, 24) correspondante.

10. Dispositif d'infusion (1) selon la revendication 9, **caractérisé en ce que** la plaque de perçage (17) et l'aiguille d'injecteur (27) sont disposées sur l'élément de fermeture (15, 25) correspondant des chambres à infusion (14, 24).

11. Dispositif d'infusion (1) selon l'une quelconque des revendications précédentes, **caractérisé en ce que** la transmission (3) est conçue de telle sorte qu'un effet de force sur l'élément de fermeture (15, 25) ait lieu de manière symétrique par rapport au centre, en particulier de manière bilatérale.

12. Dispositif d'infusion (1) selon l'une quelconque des revendications précédentes, **caractérisé en ce que** les logements de capsule (16, 26) sont disposés dans un tiroir (2) en particulier commun, lequel peut être retiré du dispositif d'infusion (1) .

13. Machine de préparation de boissons (30), en particulier machine à café, comportant un dispositif d'infusion (1) selon l'une quelconque des revendications précédentes.
